# EUROPÄISCHE PATENTANMELDUNG

(11) **EP 2 253 863 A2**
(43) Veröffentlichungstag der Anmeldung: **24.11.2010**
(21) Anmeldenummer: 10002464.5
(22) Anmeldetag: 10.03.2010
(51) Int. Cl.: F16F 13/10

(54) **Hydrolager**

(30) Priorität: 19.05.2009 DE 102009021994
(71) Anmelder: Carl Freudenberg KG, 69469 Weinheim (DE)
(72) Erfinder: Hirsch, Volker, Dr., 67346 Speyer (DE)

(57) **Zusammenfassung**

Hydrolager (1) aus einem Auflager (2) und einem Traglager (3), die durch eine Tragfeder (4) aus einem elastischen Material miteinander verbunden sind, und das einen mit einem Fluid gefüllten Arbeitsraum (6) und einen damit hydraulisch kommunizierenden Ausgleichsraum (7) hat, weiche durch eine Trennwand (5) voneinander getrennt sind, wobei das Traglager die Tragfeder und die Trennwand den Arbeitsraum umschließen und der Ausgleichsraum von der Trennwand und einem Rollbalg (8) umgeben ist, und bei dem in der Trennwand ein "Dämpfungskanal" und eine Durchbrechung vorhanden ist, wobei in die Durchbrechung (10) ein Element (11) eingefügt ist, welches einen Fluidaustausch zwischen dem Arbeitsraum und dem Ausgleichsraum erlaubt.

## Beschreibung

### Technisches Gebiet

Die Erfindung befasst sich mit einem Hydrolager aus einem Auflager und einem Traglager, die durch eine Tragfeder aus einem elastischen Material miteinander verbunden sind, und aus einen mit einem Fluid gefüllten Arbeitsraum und einem damit hydraulisch kommunizierenden Ausgleichsraum, welche durch eine Trennwand voneinander getrennt sind, wobei das Traglager, der Federkörper und die Trennwand den Arbeitsraum umschließen und der Ausgleichsraum von der Trennwand und einem Rollbalg umgeben ist und bei dem in der Trennwand, ein Dämpfungskanal und eine Durchbrechung vorhanden ist.

### Stand der Technik

Hydrolager dieser Art werden in erster Linie in Kraftfahrzeugen eingesetzt, um die im Betrieb auftretenden Schwingungen zu dämpfen bzw. zu isolieren. Dabei übernimmt die Tragfeder, die aus einem hochelastischen Gummi besteht, die akustische Isolierung, während die Dämpfung durch einen Resonanzeffekt im Dämpfungskanal erreicht wird, welcher den Arbeitsraum mit dem Ausgleichsraum hydraulisch verbindet. Diese Hydrolager werden als kostengünstige Lösung bei Verbrennungsmotoren eingesetzt.
Bei einem entkoppelten Hydrolager wird die Trennwand von zwei Gitterplatten gebildet, zwischen die mit oder ohne Spiel eine elastische Membran zur Isolierung von höherfrequenter, kleinamplitudiger Schwingungen eingelegt ist. Mit diesem Hydrolager werden sowohl tieffrequente, großamplitudige Schwingungen gedämpft, als auch eine Isolierung von hochfrequenten, kleinamplitudigen Schwingungen erreicht. Ein solches Hydrolager ist beispielsweise in der EP 0 040 290 B2 dargestellt. Solche Lager erlauben, die Dämpfungswirkung und die Isolierwirkung unabhängig voneinander zu optimieren. Die Isolierung bewirkt, dass eine Körperschallübertragung vom Motor auf das Chassis des Fahrzeugs deutlich reduziert werden kann.

Um auch insbesondere im Motorleerlauf eine deutliche Absenkung der dynamischen Lagersteifigkeit und damit eine gute akustische Isolierung zu erreichen, werden schaltbare Lager benutzt, bei denen die Trennwand in ihrer Mitte mit einer Durchbrechung, auch Leerlaufkanal genannt, versehen ist. Diese Durchbrechung wird in Abhängigkeit von der Drehzahl des Motors offen gehalten bzw. durch einen Dichtkörper verschlossen. Bei einer geschlossenen Durchbrechung arbeitet das Lager wie ein entkoppeltes Lager. Dabei werden niederfrequente Schwingungen großer Amplituden durch die Flüssigkeitsverlagerungen innerhalb des Dämpfungskanals gedämpft und hochfrequente Schwingungen mit kleinen Amplituden durch die innerhalb der Trennwand angeordnete axial bewegliche nachgiebige Membran isoliert. Durch ein Umschalten des Hydrolagers und damit einer Freigabe der Durchbrechung in der Trennwand wird durch einen Resonanzeffekt eine verbesserte Isolierung hochfrequenter Schwingungen erreicht, aber gleichzeitig die Dämpfung durch den Kanal im niederfrequenten Bereich ausgeschaltet. Es können beispielsweise Resonanzen im Bereich zwischen 20 und 100 Hz eingestellt werden. Ein Hydrolager dieser Art ist in der EP 0 547 287 B1 ausführlich beschrieben und dargestellt worden. Die Flüssigkeit im Bereich der zentralen Durchbrechung wirkt als Masse und schwingt gleichphasig zu beispielsweise leerlaufbedingt eingeleiteten Schwingungen. Die motorseitig eingeleitete Schwingungsbewegung wird zwar unterstützt, die Weiterleitung der Kräfte in das Chassis jedoch reduziert. Eine Flüssigkeitsverlagerung durch den Dämpfungskanal oder Ober die zwischen den Gitterplatten in der Trennwand angeordnete Membran findet im Wesentlichen nicht statt. Schaltbare Hydrolager sind besonders gut bei Dieselmotoren mit Direkteinspritzung geeignet, welche eine stark abgesenkte Leerlaufdrehzahl haben. Sie können im Leerlaufbetrieb bei Frequenzen zwischen 25 und 60 Hz die Federrate absenken, indem die Durchbrechung geöffnet wird, während sie bei geschlossener Durchbrechung im Fahrbetrieb als normale entkoppelte Hydrolager wirken. Im Leerlaufbereich wirken die Hydrolager ähnlich einem chassisseitig angeordneten Tilger. Bei geöffnetem Leerlaufkanal bildet sich im Kanal eine Anregung gleichgerichteter Fluidschwingungen aus. Länge und Querschnitt des Kanals sind so gewählt, dass aufgrund der hydraulischen Übersetzung der Masse des Fluids im Leerlaufkanal zusammen mit der Blähfeder des Lagers (=> Tragfeder, Membran) bei der für Leerlauf typischen Anregungsfrequenz eine Resonanz entsteht. Dabei schwingt die Flüssigkeit im Kanal gleichphasig mit der Anregung. Durch die Resonanzüberhöhung wird in dem betreffenden Frequenzbereich die dynamische Steifigkeit des Motorlagers abgesenkt. Die Konstruktion und der Einsatz eines schaltbaren Lagers ist jedoch aufwändig, da für den Schaltvorgang gesonderte Stellglieder im Hydrolager und im Fahrzeug notwendig sind.

### Darstellung der Erfindung

Der Erfindung liegt die Aufgabe zugrunde, ein Hydrolager zu schaffen, welches eine Absenkung der dynamischen Steifigkeit insbesondere bei den besonders kritischen Frequenzen des Motorleerlaufs ermöglicht, ohne in Abhängigkeit der Motordrehzahl geschaltet werden zu müssen. Das Lager soll eine gute Lagerdämpfung gegen Motorstuckem haben. Gleichzeitig soll das Lager einfachster Bauweise sein und dabei in den unterschiedlichen Frequenz- bzw. Amplutidenbereichen eine gute Dämpfung bzw. Isolierung ergeben.

Die Lösung der gestellten Aufgabe erfolgt mit den Merkmalen des Anspruchs 1. Die Unteransprüche 2 bis 27 stellen vorteilhafte Weiterbildungen des Erfindungsgegenstands dar.

Bei einem Hydrolager der eingangs genannten Gattung wird in die Durchbrechung anstelle des mechanisch oder elektrisch zu betätigenden Verschlusses eines schaltbaren Lagers ein Element eingefügt, welches wie bei einem schaltbaren Lager bei einer Motordrehzahl mit Schwingungen, vorzugsweise im Motorleerlauf oder im kritischen Anregungsfrequenzbereich selbsttätig eine die dynamische Steifigkeit des Hydrolagers herabsetzende Resonanzschwingung ermöglicht. Dabei wirken die Massen des Fluids in der Durchbrechung des genannten Elements als schwingende Masse und die Volumensteifigkeit der Tragfeder und der zwischen den Gittern angeordneten Membran als Feder des Resonators. Bevorzugt wird das Element so ausgelegt, dass es die Fluidverschiebung durch die Durchbrechung mit einer stark progressiven Volumenstefigkeit aufnimmt. So wird gewährleistet, dass der Fluidaustausch begrenzt wird und der bei niedrigeren Frequenzen angeordnete Resonanzeffekt zur Erzeugung der Lagerdämpfung erhalten bleibt.

Der Erfindungsgedanke besteht im Wesentlichen darin, dass in den Leerlaufkanal ein zusätzliches Element mit einer progressiven Volumensteifigkeit eingebracht wird. Progressive Volumenstefigkeit heißt hier, dass das Element der Fluidverschiebung im Leerlaufkanal einer mit der Verschiebungsamplitude überproportional, also progressiv zunehmende Widerstandskraft entgegensetzt.

Bei kleinen Frequenzen und großen Amplituden (Fall der Dämpfung; z.B. Frequenz ca.10 Hz und Anregungsamplitude ca. 0.2 - 1,0mm) muss zwischen den Kammem des Hydrolagers ein großes Fluidvolumen ausgetauscht werden. Wegen der großen Volumina kann dies nicht durch die Isoliermembran aufgenommen werden. Auch durch ein Element im Leerlaufkanal kann dieses Volumen nicht aufgenommen werden, weil dieses wegen der progressiven Charakteristik eine große Gegenkraft bildet. Das Fluid muss durch den Dämpfungskanal strömen und verursacht so die gewünschte Dämpfung des Motorlagers.

Bei leerlauftypischen Frequenzen und kleinen Amplituden (Fall der Steifigkeitsabsenkung; z.B. Frequenz ca. 20 - 30 Hz und Amplitude < 0,2 mm) sperrt der Dämpfungskanal aufgrund der Massenträgheitswirkung des darin befindlichen Fluids. Es kann der Schwingungsbewegung nicht mehr folgen. Spiel und Nachgiebigkeit der Isoliermembran müssen so abgestimmt sein, dass das zwischen den Fluidkammem ausgetauschte Volumen nicht allein durch die Isoliermembran aufgenommen werden kann. Folglich muss zumindest ein Teil des Fluids durch den Leeriaufkanal aufgenommen werden. Da dieses Teilvolumen klein ist und das Element im Leeriaufkanal eine progressive Charakteristik hat, ist dort die Widerstandskraft noch klein und die Schwingung ist möglich. Es bildet sich aufgrund der Gestaltung des Kanals eine Resonanz aus, welche den Fluidaustausch verstärkt und so die erwünschte Absenkung der dynamischen Steifigkeit des Lagers bewirkt.

Bei hohen Frequenzen und kleinen Amplituden (Fall der akustischen Isolation im Fahrbetrieb; z.B. Frequenzen > 50 Hz und Amplituden < 0,1 mm) sperrt neben dem Dämpfungskanal auch der Leeriaufkanal, weil auch das Fluid hier aufgrund seiner Massenträgheitswirkung nicht mehr der Schwingungsbewegung folgen kann. Ein Fluidaustausch findet nun nur noch über die Isoliermembran statt.

Für die Ausbildung des Elements sind mehrere Möglichkeiten denkbar. So ist es möglich, das Element derart auszugestalten, dass es nicht mit der Trennwand verbunden ist und innerhalb der Durchbrechung in Strömungsrichtung der Flüssigkeit frei zwischen zwei begrenzende Anschlägen beweglich ist.

Eine andere Möglichkeit sieht vor, das Element mit der Trennwand fest verbunden und zumindest teilweise elastisch ausgebildet ist, sodass die oben erwähnte progressive Volumensteifigkeit erreicht wird. Auch Kombinationen der beiden Varianten sind denkbar.

Bei beiden Möglichkeiten wird folglich in die Durchbrechung ein Element eingefügt, welches selbsttätig bei Motorschwingungen, wie sie im Leerlauf im Frequenzbereich von 20 bis 50 Hz um Amplituden von < ± 0,2 mm auftreten, mit zunehmender Amplitude den dem Fluidaustausch zwischen Arbeits- und Ausgleichskammer einen überproportional zunehmenden Widerstand entgegensetzen (Progression).

Die Durchbrechung wird in der Trennwand angeordnet. Dabei ist darauf zu achten, dass die Durchbrechung die Funktion eines Tilgerkanals übernimmt, in dem dass Fluid die gewollte Schwingbewegung ausführen kann. Durch die Geometrie der Durchbrechung, insbesondere durch ihre Querschnittsfläche senkrecht zur Strömungsrichtung und die Länge in Strömungsrichtung des Fluids lassen sich Frequenzlage und Betrag des für die Absenkung der dynamischen Steifigkeit des Hydrolagers erforderlichen Resonanzeffekts einstellen. Ggf. sind hier zusätzliche konstruktive Maßnahmen erforderlich, wie sie auch später in den Ausführungsbeispielen dargestellt werden.

Die Erfindung ist vom Grundsatz her bei linearen Hydrolagem einsetzbar, bei denen eine starre Trennwand zwischen den das Fluid aufnehmenden Räumen vorhanden ist, wobei die Räume durch einen Dämpfungskanal zur Dämpfung niederfrequenter, großamplitudiger Schwingungen verbunden sind. Sehr häufig ist dieser Dämpfungskanal als Ringkanal ausgebildet. Bevorzugt wird die Erfindung jedoch bei Hydrolagem eingesetzt, welche unter Weglassung des Schaltmechanismus in ihrem konstruktiven Aufbau einem Schaltlager entsprechen.

Um die eingangs genannte erste Möglichkeit bei der Ausbildung des Elements zu verwirklichen, ist das Element als ein schwimmend gelagerter Verschlussstopfen ausgebildet. Dieser Verschlussstopfen hat Anschlagflächen, die zusammenwirkend mit Gegenflächen an der Trennwand die Durchbrechung bei vorgegebenen Amplituden verschließen. Dabei können die Anschlagflächen des Verschlussstopfens aus jeweils einem beidseitig am Verschlussstopfen angebrachten Bund bestehen, welcher am zugeordneten Rand der Durchbrechung oder an in der Ausnehmung vorhandenen Gegenflächen zur Anlage kommen und die Durchbrechung verschließen können. Ein solcher Verschlussstopfen kann bündig mit den Rändem der Durchbrechung abschließen. Es ist aber auch möglich, den Verschlussstopfen etwa mittig mit einem Bund zu versehen, der in einer Nut in der Wand der Durchbrechung angeordnet ist und jeweils in Abhängigkeit von den Frequenzen und Amplituden in den Fluidräumen an einer Seitenwand der Nut anliegt.

Um eine Geräuschentwicklung innerhalb des Hydrolagers beim Anschlagen des Verschlussstopfens zu vermeiden, sind die Anschlussflächen am Verschlussstopfen und/oder an den Gegenflächen an der Trennwand mit einem nachgiebigen Material wie beispielsweise einem Elastomer ummantelt. Dabei kann der Verschlussstopfen selbst aus MetaU oder aus Kunststoff bestehen. Als Abwandlung hierzu ist es möglich, die Gegenflächen an der Trennwand selbst aus einem nachgiebigen Material herzustellen oder mit einem solchen zu beschichten oder auch den Verschlussstopfen in Gänze aus diesem Material zu bilden.

Eine weitere Abwandlung besteht darin, den Verschlussstopfen mit einem elastischen Bereich zu versehen, welcher beim Anschlagen des Stopfens an der Trennwand durch Aufnahme eines zusätzlichen Fluidvolumens einen sprungartigen Druckanstieg in der Arbeitskammer vermeidet und so die Anschlagcharakteristik weicher gestaltet und das Anschlaggeräusch reduziert.

Als weiterführende Maßnahme kann in diesen elastischen Bereich ein Spalt, beispielsweise ein Schnitt in einem Elastomerbauteil, eingebracht werden, der ein Überdruckventil bildet und den Druckanstieg beim Anschlagen des Stopfens durch Aufweiten des Spalts ein Überströmen des Fluids von einer in die andere Kammer durch den Stopfen ermöglicht und so einen sprungartigen Druckanstieg im Hydrolagers und damit verbundene Anschlaggeräusche reduziert oder vermeidet.

Eine andere Möglichkeit, den Erfindungsgedanken zu verwirklichen, besteht darin, dass das Element eine elastische Verschlussmembran ist. Diese Verschlussmembran wird in der Mitte oder an einem der beiden Enden der Durchbrechung angeordnet. Dabei wird sie mit ihrem Außenrand in der Durchbrechung gehalten.

Je nach Einsatzzweck des Hydrolagers kann die Verschlussmembran als Rollmembran ausgebildet sein, die eine größere Bewegung der Verschlussmembran und damit der in der Durchbrechung schwingenden Fluidmenge zulässt. Möglich ist aber auch, dass die Verschlussmembran mittig mit einem scheibenförmigen, steifen Einsatz versehen ist.

Weitere Möglichkeiten zur Abstimmung der Progression der Volumensteifigkeit ergeben sich aus einer Kombinationen von Stopfen und Membran derart, das eine Membran in einem Stopfen befestigt oder ein Stopfen mit Anschlägen zur Trennwand des Hydrolagers als Einsatz in einer Membran eingesetzt wird.

In einer Vielzahl von Einsatzgebieten ist es wünschenswert, wenn die Membran eine möglichst große Fläche hat, um bei der die dynamische Steifigkeit des Hydrolagers absenkende Resonanzschwingung ein großes Fluidvolumen mit einer geringen Gegenkraft aufzunehmen. Gleichzeitig ist ein enger Kanalquerschnitt günstig für die Tilgerwirkung bei einer niedrigeren Frequenzlage. Um hierzu eine günstige Lösung zu erreichen, kann die Durchbrechung an ihrer Einlassöffnung und/oder Auslassöffnung mit den Durchflussquerschnitt der jeweiligen Öffnung bzw. der Öffnungen verringernden Ansätzen versehen sein. Dadurch wird eine Verminderung des Durchbrechungsquerschnitts erreicht und gleichzeitig eine große Membranfläche beibehalten.

Eine andere Möglichkeit, um diesen Zweck zu erreichen, wird dadurch erreicht, dass in der Durchbrechung ober- und unterhalb der Verschlussmembran und mit Abstand zur Verschlussmembran die Strömung des Fluids begrenzende Scheiben oder Hülsen angebracht sind. Der Strömungskanal der Durchbrechung wird dabei zumindest teilweise durch den Spalt zwischen der Membranoberfläche und den Scheiben oder Hülsen gebildet.

Die bevorzugte Ausführungsform des Hydrolagers ist sowohl mit einem Dämpfungskanal als auch mit einer Trennwand mit einer Isoliermembran ausgestattet. Die Isoliermembran wird dabei von Gitterplatten mit oder ohne Spiel eingefasst. Bei einer solchen Ausführungsform des Hydrolagers ist es günstig, wenn die Verschlussmembran und die Isoliermembran aus dem gleichen Material hergestellt sind, die in Weiterführung auch einstückig als ein Bauteil ausgebildet sein können. Schließlich ist es möglich, dass die einen Anschlag bildenden Gegenflächen an der Trennwand und die Isoliermembran einstückig als ein Bauteil aus Elastomermaterial bestehen.

### Kurzbeschreibung der Zeichnung

In der beiliegenden Zeichnung sind verschiedene Ausführungsformen der vorliegenden Erfindung dargestellt.

Es zeigt;
- Figuren 1 und 2: in schematischer Darstellung und im Schnitt ein lineares Hydrolager mit einer zentralen Durchbrechung in der Trennwand und darin eingesetzten Verschlussstopfen,
- Figuren 3 und 4: entkoppelte Hydrolager ebenfalls im Schnitt mit unterschiedlicher Ausbildung der Anschlagflächen in der Durchbrechung,
- Figuren 5 und 6: Hydrolager mit unterschiedlicher Ausgestaltung einer Membran in der Durchbrechung,
- Figur 7: Hydrolager mit einer Membran in der Durchbrechung die einstückig mit der Isoliermembran ausgeführt ist.
- Figur 8: Hydrolager mit einer elastischen Membran, die bereichsweise durch einen scheibenförmigen Einsatz verstärkt ist
- Figur 9: Hydrolager mit einem verschiebbaren Stopfen, in den ein elastischer Bereich eingebettet ist.
- Figur 10: Hydrolager mit Scheiben, bei denen ein Teil des strömungsführenden Kanals durch einen Spalt zwischen diesen Scheiben und der Membranoberfläche gebildet wird.
- Figuren 11 bis 13: Hydrolager mit unterschiedlicher Ausgestaltung der Querschnitte bei der Durchbrechung,
- Figur 14: ein Diagramm, bei dem die Volumensteifigkeit des Stopfens oder der Membran in der Durchbrechung in Bezug zur Verschiebung der Flüssigkeit in der Durchbrechung dargestellt ist,
- Figur 15: im Diagramm eine Gegenüberstellung der dynamischen Steifigkeiten eines schaltbaren Lagers mit dem selbsttätig sich einstellenden Hydrolager, wobei die Schaltung des schaltbaren Hydrolagers hier bei 50 Hz erfolgt.

### Ausführung der Erfindung

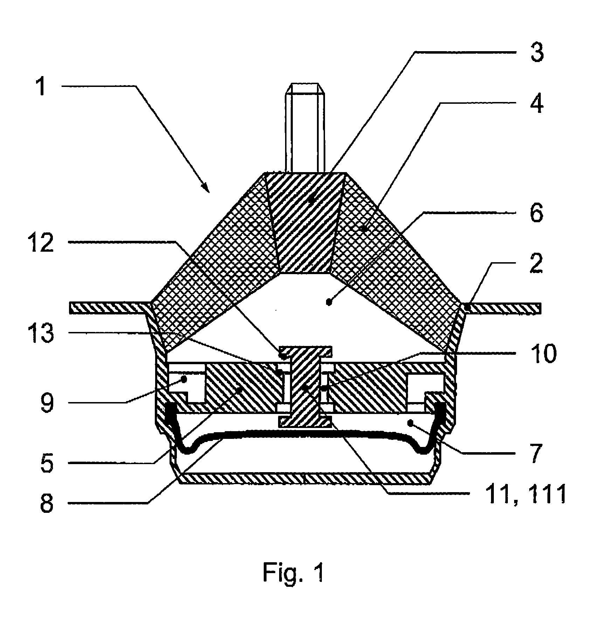

Das in der Figur 1 dargestellt Hydrolager 1 besteht aus dem Auflager 2, dem Traglager 3 und der im vorliegenden Fall ringförmig ausgebildeten Tragfeder 4. Die Tragfeder 4 besteht aus einem elastischen Material. Im Auflager 2 ist die Trennwand 5 untergebracht, welche die mit einem Fluid gefüllten Räume 6 und 7 voneinander trennt. Dabei handelt es sich um den Arbeitsraum 6 und den Ausgleichsraum 7. Der Arbeitsraum 6 wird im Wesentlichen vom Traglager 3, der Tragfeder 4 und der Trennwand 5 begrenzt, während der Ausgleichsraum 7 von der Trennwand 5 und dem Rollbalg 8 umgeben ist. In der Trennwand 5 ist der Dämpfungskanal 9 untergebracht über den die beiden Räume 6 und 7 miteinander hydraulisch kommunizieren. Ober den Dämpfungskanal werden Schwingungen mit niedriger Frequenz im Bereich von etwa 2 bis 20 Hz und großer Amplitude von über ± 0,1 bis 1 mm gedämpft. In der Trennwand 5 ist die Durchbrechung 10 mit dem darin eingefügten Element 11 vorgesehen, welche selbsttätig bei Schwingungen im kritischen Anregerfrequenzbereich AF die dynamische Steifigkeit C des Hydrolagers 1 herabsetzt. Bei Schwingungen im kritischen Anregerfrequenzbereich AF handelt es sich in der Regel um Motorschwingungen, die im Leerlauf des Motors auftreten. Dieser Frequenzbereich liegt oberhalb der Frequenzen, die für die Wirksamkeit des Dämpfungskanals 9 maßbeglich sind. Generell ist es jedoch möglich, die Form der Durchbrechung 10 und das Element 11 so zu gestalten, dass auch andere Frequenzbereiche als die des Leerlaufs erfasst werden können.

Das Element 11 und auch die Durchbrechung 10 sind dabei so auszuführen, dass sich im Anregerfrequenzbereich AF eine zur Anregung gleichphasige Resonanzschwingung des Fluids zwischen den Räumen 6 und 7 ausbildet, deren Amplitude so groß ist, das die dynamische Steifigkeit des Motorlagers abgesenkt wird. Das Element selbst schwingt dabei hin- und her. Bei größeren Schwingungsamplituden, die insbesondere bei niedrigen, für die Lagerdämpfung relevanten Frequenzen auftreten, wirken das Element 11 und die Durchbrechung 10 aufgrund der progressiv ausgebildete Volumensteifigkeit begrenzend bezüglich der Schwingungsamplitude in der Durchbrechung, sodass die Wirksamkeit des Dämpfungskanats 9 erhalten bleibt.

Diese Progressivität ist besonders stark, wenn der Verschluss der Durchbrechung 10 durch das Element 11 abrupt erfolgt. Von Vorteil ist es jedoch, wenn die am Element 11 vorgegebenen Anschlagflächen bzw. die Gegenflächen an der Trennwand 5 aus sehr weichem, nachgiebigen Material gefertigt sind, so dass auch während bzw. nach dem Schließvorgang das Element 11 nicht abrupt in seiner Bewegung gestoppt, sondern kontinuierlich abgebremst wird.

Oberhalb des Anregerfrequenzbereichs AF behindern das Element 11 sowie das in der Durchbrechung 10 befindliche Fluid einen Fluidaustausch aufgrund ihrer Massenträgheitswirkung und das Hydrolager 1 wirkt wie ein lineares Hydrolager. In diesem Fall reduziert sich die Schwingungsamplitude des Fluids in der Durchbrechung mit zunehmender Frequenz.

Im Allgemeinen wir die Durchbrechung 10 und das Element 11 so ausgebildet, dass es selbsttätig Motorschwingungen im Leerlauffrequenzbereich LF von 20 bis 50 Hz und Amplituden A von < ± 0,2 mm wirksam erfasst und sich in diesem Frequenzbereich eine Absenkung der dynamischen Federrate des Hydrolagers 1 ergibt. Die Durchbrechung 10 wird in der Trennwand 5 angeordnet und wirkt bei den vorgenannten Motorschwingungen als Kanal für die die dynamische Steifigkeit des Hydrolagers absenkende Resonanzschwingung. Der Dämpfungskanal 9 wird vorzugsweise als Ringkanal ausgebildet und ist in seiner Geometrie auf die gewünschte Dämpfungswirkung abgestimmt.

Das Element 11 kann als ein schwimmend gelagerter Verschlussstopfen 111 ausgestaltet werden. Der Verschlussstopfen 111 wird mit den Anschlagsflächen 12 versehen, die mit den Gegenflächen 13 in der Trennwand 5 zusammenwirken und bei einer vorgegebenen Amplitude A die Durchbrechung 10 verschließen.

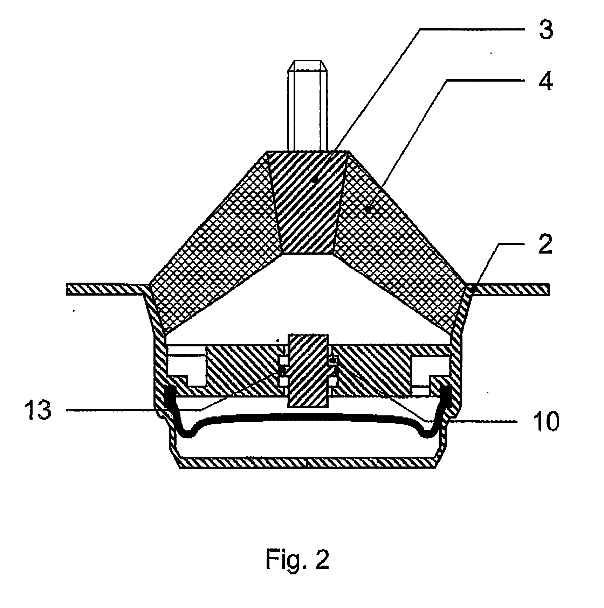

Die Anschlagflächen 12 des Verschlussstopfens 111 sind aus jeweils einem beidseitig am Verschlussstopfen 111 angebrachten Bund, die am Rand der Durchbrechung 10 oder in der Durchbrechung 10 vorhandenen Gegenflächen zu Anlage kommen und die Durchbrechung 10 verschließen. Die letztgenannte Ausgestaltung ist in der Figur 2 gezeigt, deren Ausführungsform im Übrigen mit der Ausführungsform nach der Figur 1 identisch ist. Der Verschlusstopfen 111 hat mittig einen Bund 14, der in einer Nut in der Wand der Durchbrechung 10 angeordnet ist und jeweils in Abhängigkeit von der Druckdifferenz bzw. Amplitude A in den Räumen 6 und 7 hin- und her schwingt bzw. an einer Seitenwand der Nut zur Anlage kommt.

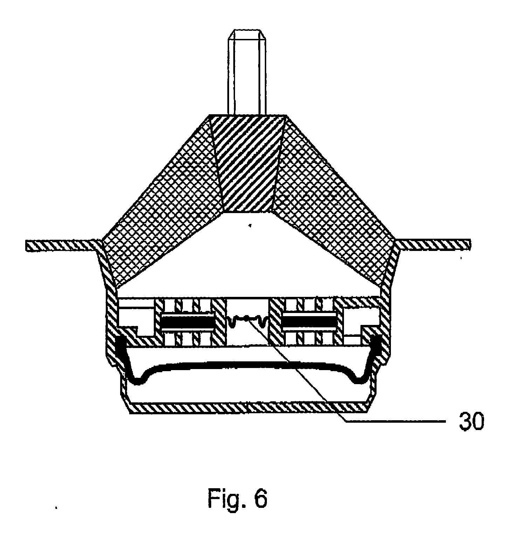

Die Anschlagsflächen 12 am Verschlussstopfen 111 und/oder die Gegenflächen 13 an der Trennwand 5 werden bevorzugt mit einem Elastomer ummantelt, der die oben angesprochene Weichheit des Anschlags ergibt. Möglich ist es auch, den Verschlussstopfen 111 insgesamt aus einem Elastomer herzustellen, was in der Ausführungsform der Figur 6 gezeigt ist. Dabei können auch die Gegenflächen 13 von der Trennwand 5 aus einem Elastomermaterial bestehen.

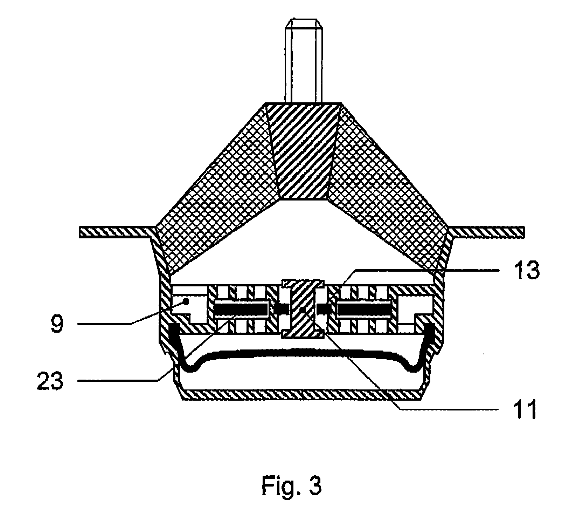

Die bevorzugte Ausführungsform ist in den Figuren 3 un 4 dargestellt, in denen entkoppelte Hydrolager 1 mit Dämpfungskanal 9 und Isoliermembran 23 verwendet werden. Bei dieser Ausführungsform kommt die gesonderte Wirksamkeit des Dämpfungskanals 9 für die Dämpfung niederfrequenter Schwingungen mit großen Amplituden, der Isoliermembran 23 für Schwingungen mit höherer Frequenz und niedrigeren Amplituden sowie die Resonanzwirkung des Elements 11 in der Durchbrechung 10 voll zur Geltung.

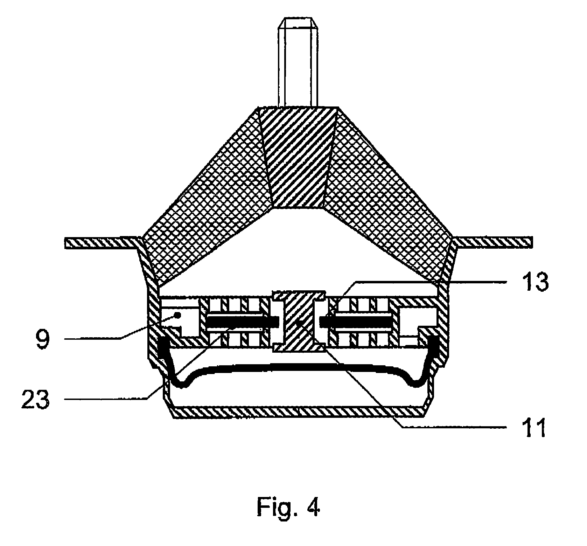

Dabei zeigt die Figur 3 die Möglichkeit, die Gegenflächen 13 an der Trennwand 5 aus einem Elastomermaterial herzustellen. Dieses ist besonders günstig, wenn die Ausführungsform nach der Figur 4 gewählt wird, bei der sowohl die Gegenflächen 13 als auch die Isoliermembran 23 aus dem gleichen Material oder sogar einstückig hergestellt sind.

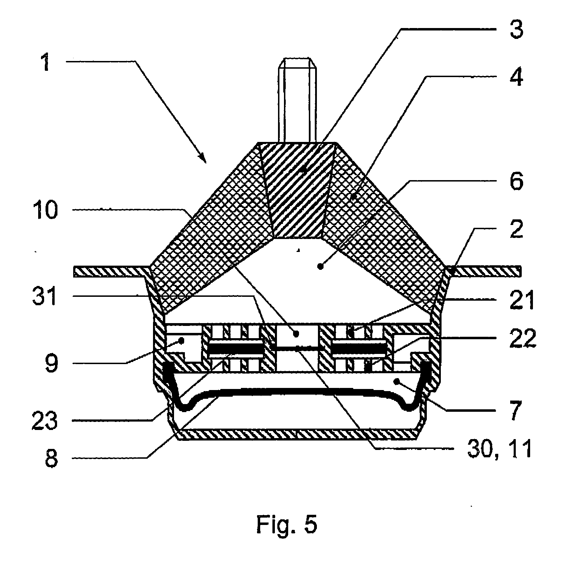

Durch eine Ausführungsform, bei der das Element 11 nicht durch einen Verschlussstopfen 111 sondern durch eine Membran 30 gebildet wird, kann eine mit den voranstehenden Ausführungsformen vergleichbare Wirkungsweise erreicht werden. Bei diesen in den Figuren 5 bis 7 gezeigten und besonders bevorzugten Ausführungsbeispielen ist das Hydrolager 1 im Wesentlichen in der Form eines entkoppelten Hydrolagers ausgebildet mit in der Trennwand 5 angeordnetem Dämpfungskanal 9 und einer Isoliermembran 23, die von den Gitterplatten 21 und 22 gehalten ist. Der Dämpfungskanal 9 dient der Dämpfung von Schwingungen mit niedriger Frequenz und hohen Amplituden während die Isoliermembran in Verbindung mit den Gitterplatten 21, 22 zur Isolierung von höheren Frequenzen mit niedrigeren Amplituden vorgesehen ist. Die Durchbrechung 10 mit der darin eingefügten Membran 30 dient dagegen der Ausbildung einer Resonanzschwingung im AF zur verbesserten Isolation der Motorschwingungen mit Amplituden von unterhalb ± 0,2 mm durch Absenkung der dynamischen Steifigkeit des Motorlagers. Die Frequenzbereiche und auch Amplitudenbereiche zwischen der Isolierung durch die Isoliermembran und der Tilgung durch die Verschlussmembran 30 können sich durchaus überschneiden, so dass hier in Teilbereichen eine Isolierung des Motorlagers entweder durch die Beweglichkeit der Isoliermembran 23 oder besonders ausgeprägt durch die zur Anregung gleichgerichtete Resonanzschwingung in der Durchbrechung 10 erreicht werden kann. Sowohl die Isoliermembran 23 mit den zugehörigen Gitterplatten 21, 22 als auch die Verschlussmembran 30 können entsprechend ausgebildet und an die gegebenen Frequenzen bzw. Amplituden angepasst sein. Hierfür wird die Verschlussmembran 30 entsprechend ausgestaltet.

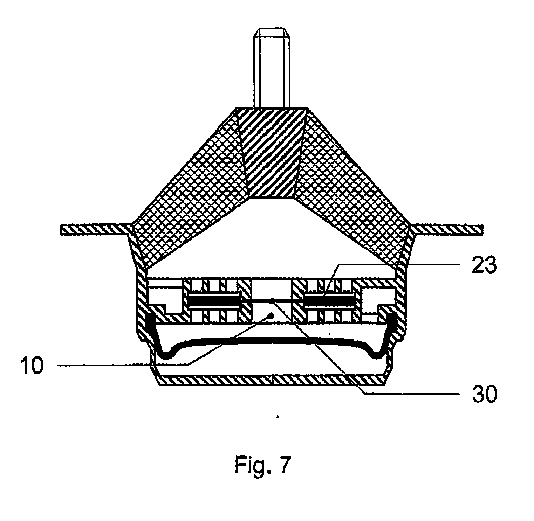

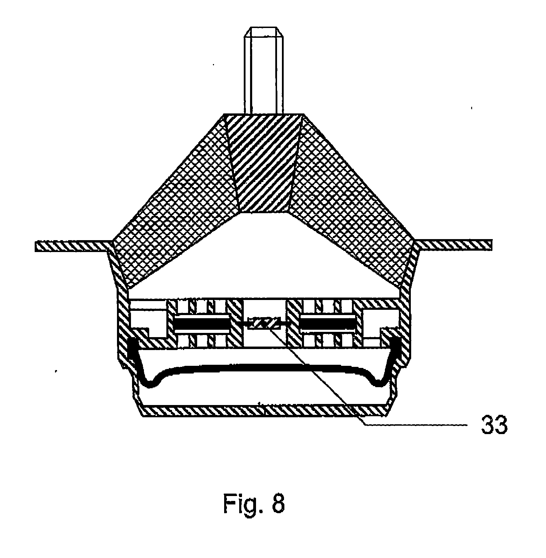

Je nach Einsatzgebiet kann die Verschlussmembran 30, wie in den Figuren 5 bis 7 gezeigt, eine unterschiedliche Ausgestaltung haben. In der Figur 5 ist die Verschlussmembran 30 als eine ebene Membran ausgestaltet, die mit ihrem Außenrand 31 in der Seitenwand 32 der Durchbrechung 10 gehalten ist. In der Ausführungsform nach der Figur 6 ist die Verschlussmembran 30 als Rollmembran ausgestaltet. Die Figur 7 zeigt schließlich eine Ausführungsform, bei der die Verschlussmembran 30 nicht nur in der Mitte der Durchbrechung 10 angebracht ist, wie das auch bei den voranstehenden Figuren gezeigt ist, sondern sie ist auch aus demselben Material wie die Isoliermembran 23 hergestellt. Beide Membranen 30 und 23 sind zu einem Einzelteil zusammengefasst. Dieses erlaubt eine einfachere Fertigung. Die Figur 8 zeigt eine Verschlussmembran 10, die mittig mit einem scheibenförmigen steifen Einsatz 33 ausgestaltet ist. Durch diesen Einsatz 33 erhält die Membran 30 eine starke progressive Ausgestaltung.

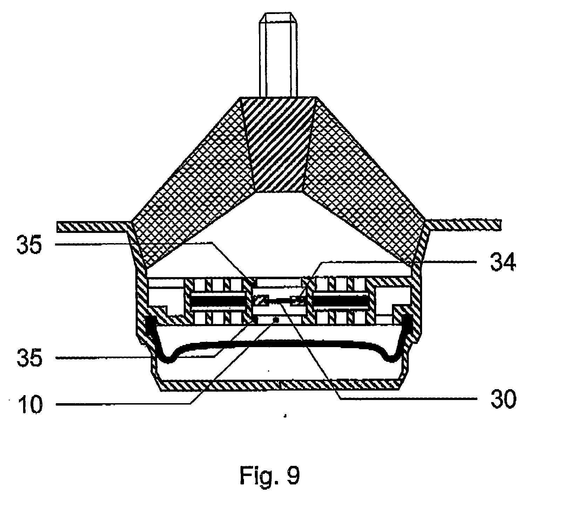

In der Figur 9 ist die Verschlussmembran 30 in einem beweglichen Element 34 eingefasst, welches seinerseits in der Durchbrechung durch entsprechende Anschläge in seiner Beweglichkeit begrenzt ist. Die Querschnitte der Membran 30 und auch der Durchlässe sind aufeinander abgestimmt, um dadurch eine entsprechende Ausrichtung des Hydrolagers 1 auf einen bestimmten Frequenzbereich zu ermöglichen.

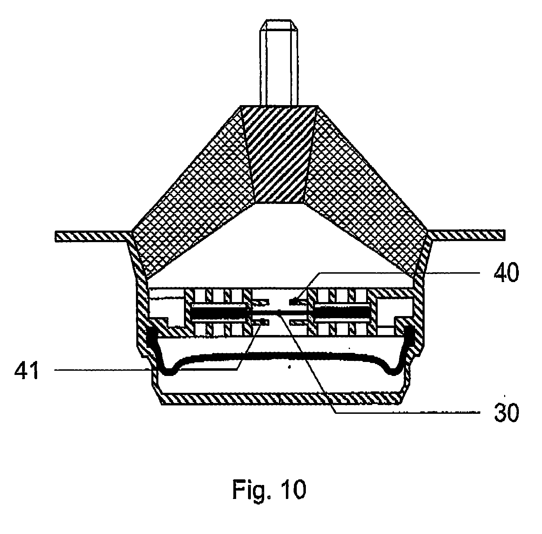

Schließlich zeigt die Figur 10 eine Ausführungsform, bei der in der Durchbrechung 10 ober- und unterhalb der Verschlussmembran 30, die bevorzugt mittig in der Durchbrechung 10 angebracht ist, Elemente 40, 41 angebracht sind, welche eine einen zusätzlichen Bereich der gerichteten Strömung zwischen den Membranoberflächen und den Scheiben erzeugen und so einen zusätzlichen Kanal zur Abstimmung der Resonanzfrequenz bilden. Die Scheiben 40 und 41 sind mit Abstand zur Verschlussmembran 30 angeordnet.

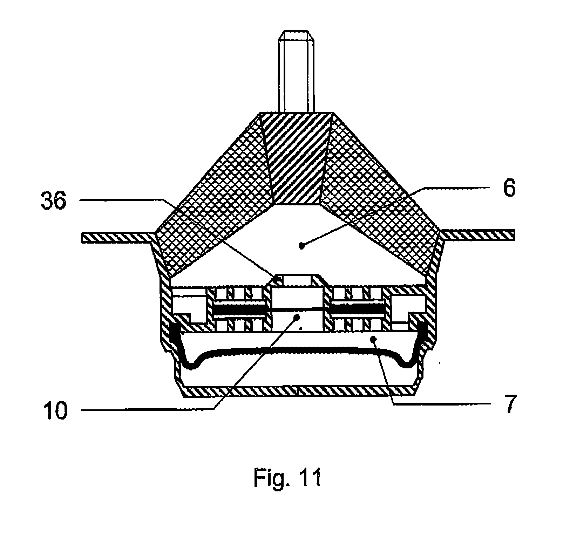

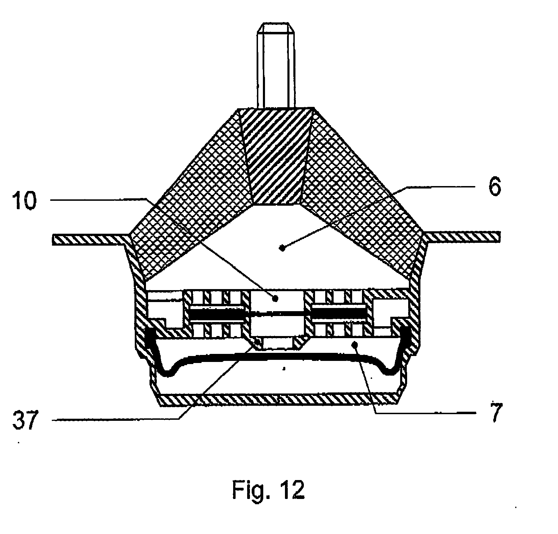

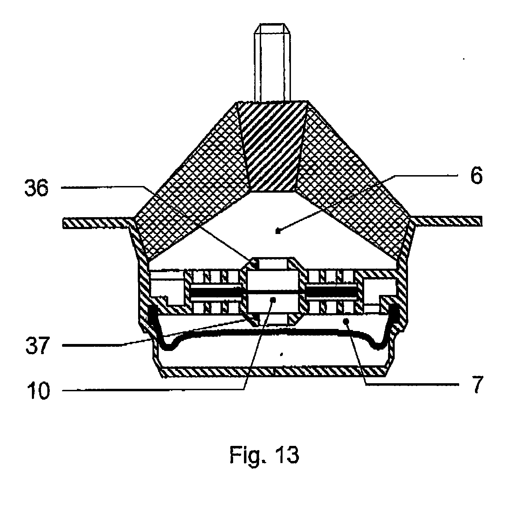

In den Figuren 11 bis 13 sind mögliche Ergänzungen der grundsätzlichen Ausgestaltung des Hydrolagers 1 nach Figur 7 gezeigt. Dabei werden in allen Darstellungen Verschlussmembran 30 und Isoliermembran 23 als Einzelteil eingesetzt. Bei Figur 11 ist die Durchbrechung 10 auf der zum Arbeitsraum 6 gerichteten Seite an ihrer Einlassöffnung mit dem Ansatz 36 versehen, der den Durchflussquerschnitt der Durchbrechung 10 verringert. Bei der Ausführungsform nach der Figur 12 ist an der Auslassöffnung der Durchbrechung 10, die zum Ausgleichsraum 7 gerichtet ist, ein entsprechender Ansatz 37 angebracht. Möglich sind natürlich auch die Anbringung der Ansätze 36 und 37 gleichzeitig, was in der Figur 13 dargestellt ist.

Die Abstimmung der Leerlaufkanalgeometrie auf die leerlauftypischen Frequenzen erfolgt durch dessen Länge und Querschnittsfläche und/oder die Masse des Elements im Leerlaufkanal. Um die benötigte Kanalgeometrie darzustellen, ohne die Größe der Membran im Leerlaufkanal einzuschränken, kann der Leerlaufkanal der Membran vor- und/oder nachgeschaltet sein.

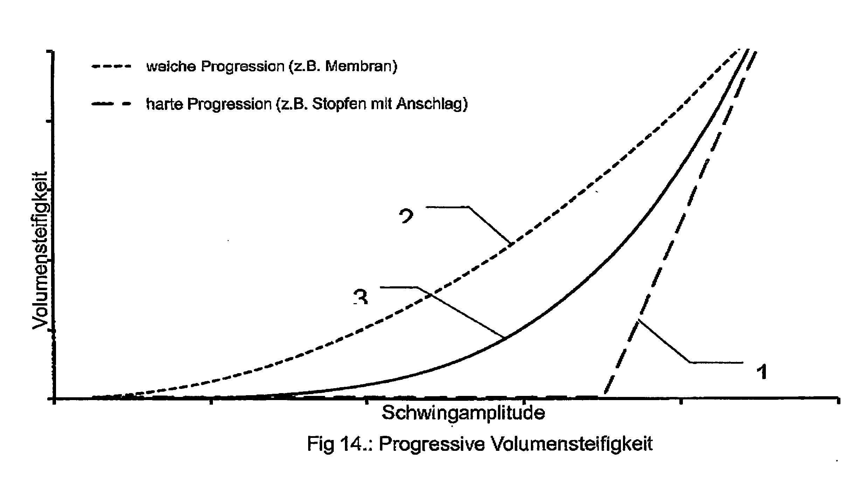

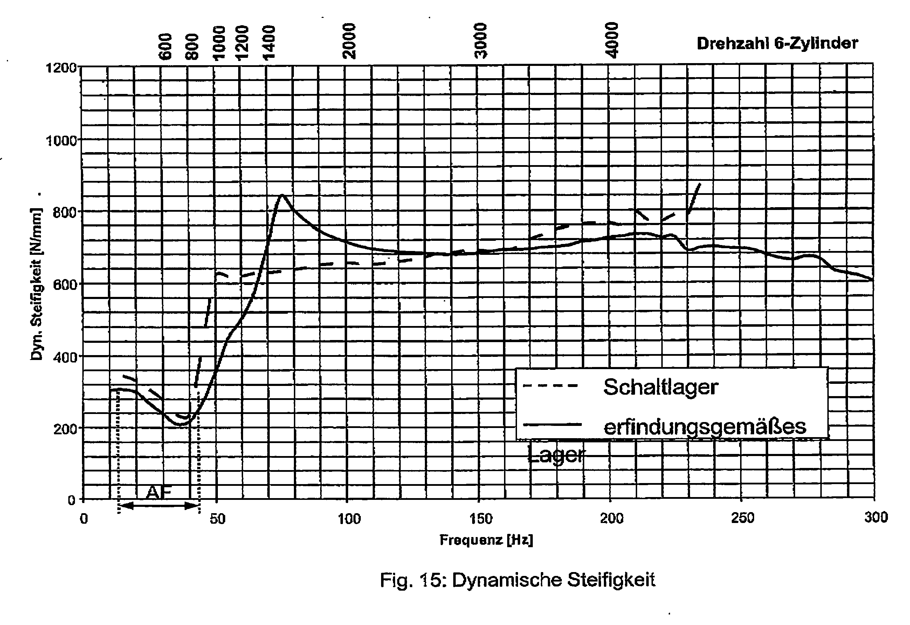

In den Figuren 14 und 15 ist die Wirkungsweise des erfindungsgemäßen Hydrolagers in Diagrammen beispielsweise dargestellt.

Das Diagramm nach Figur 14 zeigt die Entwicklung der Volumensteifigkeit C in Bezug zur Amplitude der Schwingung in der Durchbrechung für drei unterschiedliche Ausgestaltungen des Hydrolagers 1. Sowohl das Hydrolager mit dem Verschlussstopfen (siehe Linie 1) als auch das Hydrolager mit der Membran (siehe Linie 2) zeigen vergleichbare Verläufe. Dabei können die eine wie die andere Ausführungsform hier unterschiedlich eingestellt werden. Bei dem Hydrolager mit dem Verschlussstopfen zeigt der Verlauf der Kurve zunächst einen sehr flachen Anstieg der Volumensteifigkeit. In diesem Bereich vollführt der Stopfen mit der damit in Verbindung stehenden Flüssigkeitssäule eine schwingende Bewegung, durch die eine Absenkung der dynamischen Steifigkeit des Hydrolagers erreicht wird. Sobald der Stopfen die Durchbrechung 10 durch Anlage in einem der Anschläge verschließt, entsteht ein steiler Anstieg der Blähfederrate. Bei der Verwendung einer Verschlussmembran ist der Verlauf der Kurve in der Regel vergleichbar mit der Linie 2, bei der bereits bei geringen Amplituden eine starke Resonanz eintritt, die ohne sprunghaftes Verhalten in eine stark progressive Erhöhung der Blähfederrate und damit Tilgung übergeht.

Bei einem längs des Leerlaufkanals beweglichen Stopfen, bei dem die progressive Volumensteifigkeit durch (gummierte) Anschläge gebildet wird (freie Beweglichkeit => keine Gegenkraft; Anschlag => sehr hohe Gegenkraft) weist die progressive Charakteristik als Grenzfall einen Knick auf.

Bei einer elastischen Membran im Leerlaufkanal, bei der die progressive Volumensteifigkeit durch die Verformung der Gummihaut und/oder das progressive Werkstoffverhalten des Elastomers gebildet wird, ist die progressive Charakteristik eher weich und hat einen stetig steiler werdenden Verlauf.

Beide Konzepte sind kombinierbar (Membran im Stopfen mit Anschlägen Fig. 9 oder starre Platte in der Membran Fig. 8), um so die gewünschte Charakteristik einzustellen (Linie 3 in Figur 14).

Die Wirkungsweise des erfindungsgemäßen Hydrolagers ist vergleichbar mit einem Schaltlager, bei dem in der Trennwand 5 eine Öffnung für die Resonanzschwingung zur Absenkung der dynamischen Steifigkeit des Motorlagers bei Leerlaufdrehzahl vorhanden ist. Bei diesem wird die Öffnung bei stark abgesenkter Leerlaufdrehzahl durch entsprechende Antriebe geöffnet und dadurch die Wirkung des Dämpfungskanals aufgehoben. Die in der Öffnung schwingende Flüssigkeitssäule ergibt eine Resonanzwirkung. Bei geschlossener Öffnung wird diese Wirkung aufgehoben und das Lager wirkt wieder wie ein entkoppeltes Hydrolager. Der Aufwand für den Schaltmechanismus ist jedoch beträchtlich. Durch die vorliegende Erfindung wird dieser Aufwand völlig eliminiert, ohne dass eine entscheidende Verschlechterung der Wirkungsweise des Hydrolagers eintritt. Der Verschluss der Öffnung in der Trennwand erfolgt hier durch eine Element, welches die Schwingungsbewegung des Fluids in der Öffnung in ihrer Amplitude begrenzt.

Im Diagramm nach der Figur 15 ist ein Vergleich zwischen einem Schaltlage (gestrichelte Linie; Schaltpunkt bei ca. 50 Hz) und einem Lager gemäß der Erfindung (durchgezogene Linie) unter gleichen Bedingungen durchgeführt worden. Es zeigt sich, dass ein weitgehend vergleichbarer Verlauf der Kurven stattfindet. Lediglich im Frequenzbereich von 70 bis etwa 90 Hz, was einem Drehzahlbereich für den betreffenden Motor von 1400 bis 1800 Umdrehungen entspricht, entsteht eine meist tolerierbare, höhere dynamische Steifigkeit bei der erfindungsgemäßen Ausführung mit einem selbsttätig reagierenden Verschluss der Durchbrechung 10 in der Trennwand 5. Diese Überhöhung der dynamischen Steifigkeit tritt bei Frequenzen knapp oberhalb der Leerlauf-Frequenzen auf. Hier herrscht ein sehr ähnlicher Schwingungszustand wie bei den leerlauftypischen Frequenzen, jedoch ist die Schwingung im Leerlaufkanal gegenphasig zur Anregung und wirkt deswegen versteifend auf das Motorlager. Dieser Effekt ist an sich unerwünscht, kann aber häufig toleriert werden, da der betreffende Drehzahlbereich im Fahrbetrieb kaum benutzt wird oder wenn das Fahrzeuginnengeräusch in diesem Frequenzbereich nicht empfindlich auf eine erhöhte Anregung reagiert. Im Anregerfrequenzbereich verlaufen die Kurven nahezu parallel. Das gleiche kann auch gesagt werden für den Fahrbereich der vorhandenen Drehzahlen des Motors zwischen 1800 und 4600 Umdrehungen pro Minute.

## Patentansprüche

1. Hydrolager aus einem Auflager und einem Traglager, die durch eine Tragfeder aus einem elastischen Material miteinander verbunden sind, und das einen mit einem Fluid gefüllten Arbeitsraum und einen damit hydraulisch kommunizierenden Ausgleichsraum hat, welche durch eine Trennwand voneinander getrennt sind, wobei das Traglager die Tragfeder und die Trennwand den Arbeitsraum umschließen und der Ausgleichsraum von der Trennwand und einem Rollbalg umgeben ist, und bei dem in der Trennwand ein ,,Dämpfungskanal" und eine Durchbrechung vorhanden ist,
**dadurch gekennzeichnet, dass** in die Durchbrechung (10) ein Element (11) eingefügt ist, welches einen Fluidaustausch zwischen dem Arbeitsraum und dem Ausgleichsraum erlaubt.

2. Hydrolager nach Anspruch 1, **dadurch gekennzeichnet, dass** das Element (11) den Fluidaustausch zwischen den Räumen (6, 7) mit einer progressiven Volumensteifgkeit aufnimmt.

3. Hydrolager nach Anspruch 1 oder 2, **gekennzeichnet dadurch, dass** das von dem Element (11) aufgenommene Fluidvolumen (durch die progressive Volumensteifigkeit) derart begrenzt wird, dass im Dämpfungskanal (9) bei niedrigen Frequenzen und großen Schwingungsamplituden eine Dämpfung erzeugende Fluidschwingung angeregt wird.

4. Hydrolager nach Anspruch 1 bis 3, **dadurch gekennzeichnet, dass** die Durchbrechung (10) und das Element (11) derart ausgebildet sind, dass sich im Anregerfrequenzbereich (AF) eine der Anregung gleichgerichtete Resonanzschwingung des Fluids zwischen den Räumen (6, 7) ausbilden kann, die die dynamische Steifigkeit des Motorlagers herabsetzt.

5. Hydrolager nach Anspruch 1 bis 4, **dadurch gekennzeichnet, dass** die Durchbrechung (10) zentral in der Trennwand (5) angeordnet ist,

6. Hydrolager nach einem der Ansprüche 1 bis 5, **dadurch gekennzeichnet, dass** der Dämpfungskanal (9) als Ringkanal ausgebildet ist.

7. Hydrolager nach einem der Ansprüche 1 bis 6, **dadurch gekennzeichnet, dass** das Element (11) ein schwimmend gelagerter Verschlussstopfen (111) ist.

8. Hydrolager nach Anspruch 7, **dadurch gekennzeichnet, dass** der Verschlussstopfen (111) Anschlagflächen (12) hat, die zusammenwirkend mit den Gegenflächen (13) an der Trennwand (5) die Durchbrechung (10) bei einer vorgegebenen Amplitude (A) verschließen.

9. Hydrolager nach Anspruch 8, **dadurch gekennzeichnet, dass** die Anschlagflächen (12) des Verschlussstopfens (111) aus jeweils einem beidseitig am Verschlussstopfen (111) angebrachten Bund bestehen, welcher am zugeordneten Rand der Durchbrechung (10) oder an in der Durchbrechung (10) vorhandenen Gegenfläche (14) zur Anlage kommen und die Durchbrechung (10) verschließen.

10. Hydrolager nach Anspruch 9, **dadurch gekennzeichnet, dass** der Verschlussstopfen (111) bündig mit den Rändem der Durchbrechung (10) abschließt.

11. Hydrolager nach einem der Ansprüche 9 oder 10 **dadurch gekennzeichnet, dass** der Verschlussstopfer (111) etwa mittig einen Bund (14) hat, der in einer Nut in der Wand der Durchbrechung (10) angeordnet, jeweils in Abhängigkeit von der Druckdifferenz bzw. Amplitude (A) in den Räumen (6, 7) an einer Seitenwand der Nut anliegt.

12. Hydrolager nach einem der Ansprüche 9 bis 11, **dadurch gekennzeichnet, dass** die Anschlagflächen (12) des Verschlussstopfens (111) und/oder die Gegenflächen (13) an der Trennwand (5) mit einem Elastomer ummantelt sind.

13. Hydrolager nach einem der Ansprüche 9 bis 12, **dadurch gekennzeichnet, dass** der Verschlussstopfen (111) aus Metall oder aus Kunststoff besteht.

14. Hydrolager nach einem der Ansprüche 9 bis 13, **dadurch gekennzeichnet, dass** die Gegenflächen (13) an der Trennwand (5) aus einem Elastomermaterial sind.

15. Hydrolager nach einem der Ansprüche 9 bis 14, **dadurch gekennzeichnet, dass** der Verschlussstopfen (111) aus einem Elastomer hergestellt ist.

16. Hydrolager nach einem der Ansprüche 1 bis 6, **dadurch gekennzeichnet, dass** das Element (11) eine elastische Verschlussmembran (30) ist.

17. Hydrolager nach Anspruch 16, **dadurch gekennzeichnet, dass** die Verschlussmembran (30) axial in der Mitte der Durchbrechung (10) angeordnet ist.

18. Hydrolager nach einem der Ansprüche 1 und 17, **dadurch gekennzeichnet, dass** die Verschlussmembran (30) mit ihrem Außenrand (31) in der Durchbrechung (10) gehalten ist.

19. Hydrolager nach einem der Ansprüche 16 bis 18, **dadurch gekennzeichnet, dass** die Verschlussmembran (30) als Rollmembran ausgebildet ist.

20. Hydrolager nach einem der Ansprüche 16 bis 19, **dadurch gekennzeichnet, dass** die Verschlussmembran (30) mittig einen scheibenförmigen steifen Einsatz (33) hat.

21. Hydrolager nach einem der Ansprüche 16 bis 21, **dadurch gekennzeichnet, dass** in den Verschlussstopfen 111 zusätzlich eine elastische Verschlussmembran eingebracht ist.

22. Hydrolager nach einem der Ansprüche 16 bis 21, **dadurch gekennzeichnet, dass** die Durchbrechung (10) an ihrer Einlassöffnung und/oder Auslassöffnung mit den den Durchflussquerschnitt der jeweiligen Öffnung bzw. der Öffnungen verringernden Ansätzen (36, 37) versehen ist.

23. Hydrolager nach einem der Ansprüche 16 bis 21, **dadurch gekennzeichnet, dass** in der Durchbrechung (10) ober- und unterhalb der Verschlussmembran (30) und mit Abstand zur Verschlussmembran (30) die Strömung des Fluids begrenzende Scheiben (40, 41) angebracht sind.

24. Hydrolager nach einem der Ansprüche 1 bis 23, **dadurch gekennzeichnet, dass** die Trennwand (5) eines von Gitterplatten (21, 22) mit Spiel eingefasste elastische Isoliermembran (23) zur Isolierung von höherfrequenter, kleinamplitudiger Schwingungen hat.

25. Hydrolager nach Anspruch 24, **dadurch gekennzeichnet, dass** die Verschlussmembran (30) und die Isoliermembran (23) aus dem gleichen Material hergestellt sind.

26. Hydrolager nach Anspruch 25, **dadurch gekennzeichnet, dass** die Verschlussmembran (30) und die Isoliermembran (23) einstückig als ein Bauteil ausgebildet sind.

27. Hydrolager nach einem der Ansprüche 1 bis 13, **dadurch gekennzeichnet, dass** die Gegenflächen (13) an der Trennwand (5) und die Isoliermembran (23) einstückig als ein Bauteil aus Elastomermaterial sind.
